# EUROPÄISCHE PATENTSCHRIFT

(11) **EP 0 558 932 B1**
(45) Veröffentlichungstag und Bekanntmachung des Hinweises auf die Patenterteilung: **10.01.1996**
(21) Anmeldenummer: 93101486.4
(22) Anmeldetag: 30.01.1993
(51) Int. Cl.: B29C 45/28

(54) **Mehrfach-Nadelverschluss-Düse für Spritzgiessformen**
Multiple needle valve nozzle for injection moulds
Buse multiple à fermeture à aiguille pour moules d'injection

(30) Priorität: 29.02.1992 DE 4206318
(43) Veröffentlichungstag der Anmeldung: 08.09.1993
(73) Patentinhaber: Männer, Otto, D-79353 Bahlingen (DE)
(72) Erfinder: Männer, Otto, D-79353 Bahlingen (DE)
(74) Vertreter: Schmitt, Hans, Dipl.-Ing.

(56) Entgegenhaltungen:
- EP-A- 0 021 273
- EP-A- 0 153 592
- DE-A- 2 004 212
- DE-A- 3 249 486
- DE-A- 3 733 363
- DE-A- 4 034 934
- GB-A- 2 098 535
- US-A- 4 726 751
- US-A- 5 078 589

## Beschreibung

Die Erfindung betrifft eine Mehrfach-Nadelverschluß-Düse für Spritzgießformen mit wenigstens zwei in einem gemeinsamen Gehäuse angeordneten und einen gemeinsamen Kolbenantrieb aufweisenden Verschlußnadeln, deren jede eine ihr zugeordnete Düsenmündung verschließt und im Bereich der Düsenmündung insbesondere eine Heizung aufweist, wobei in dem gemeinsamen Gehäuse Zuführkanäle mit Abzweigungen zu den einzelnen Verschlußnadeln gemeinsam angeordnet sind.

Eine solche Mehrfach-Nadelverschluß-Düse ist aus der DE-A-3733363 bekannt.

Mehrfach-Nadelverschluß-Düsen sind aus der Praxis bekannt und dienen vorallem dazu, in Mehrfach-Spritzgießformen relativ kleine Teile auf engem Raum spritzen zu können, damit die Mehrfachform bestmöglich ausgenutzt wird. Die einzelnen Mündungen der Mehrfach-Nadelverschlußdüsen können nämlich aufgrund ihres gemeinsamen Antriebes und ihrer Anordnung in einem gemeinsamen Gehäuse so dicht nebeneinander angeordnet werden, daß auch kleine Werkstücke und deren Form-Aussparungen in der Mehrfachform entsprechend dicht bei einander angeordnet werden können.

Bei den bisher bekannten Mehrfach-Düsen besteht jedoch das Problem, daß vorallem durch die starken Temperaturschwankungen im Mündungsbereich die einzelnen Abdichtringe Maßveränderungen erfahren und sich dabei gegenseitig beschädigen können. Dieses Problem läßt sich nicht dadurch beheben, daß diese Abdichtringe stärker dimensioniert werden, denn dies würde wiederum zu einer stärkeren Reaktion auf Wärmeeinwirkungen führen.

Ein weiteres Problem besteht darin, daß diese Mehrfach-Düsen nur unzureichend gegen den Spritzdruck abgestützt werden können, da der Spritzdruck an den einzelnen Düsenmündungen gleichzeitig entsprechend stark wirkt und eine Fixierung nur jeweils am Außenumfang der gesamten Einheit möglich ist. Eine nur an der Außenseite solcher Mehrfach-Düsen erfolgende Abstützung hat sich in der Praxis als unzureichend erwiesen.

Es besteht deshalb die Aufgabe, eine Mehrfach-Nadelverschluß-Düse der eingangs erwähnten Art zu schaffen, bei welcher die Erwärmung im Mündungsbereich nicht zu einer Beschädigung führt und bei welcher gleichzeitig eine gute Abstützung gegen die aus dem Spritzdruck resultierenden Reaktionskräfte möglich ist.

Die Lösung dieser mehrfachen Aufgabe besteht bei einer Mehrfach-Nadelverschluß-Düse mit gemeinsamem Gehäuse darin, daß das gemeinsame Gehäuse unterhalb der Zuführkanäle und/oder deren Verzweigung in voneinander beabstandete, die einzelnen Verschlußnadeln und deren Düsenmündungen aufweisende Gehäuseteile aufgeteilt ist, daß diese Gehäuseteile jeweils zwischen ihren Wandungen einen Zwischenraum haben und mit dem gemeinsamen Gehäuse verbunden sind, und daß die unterhalb des Gehäusebereiches mit den gemeinsamen Zuführkanälen und deren Verzweigung vorgesehenen Abstände oder Zwischenräume der einzelnen Gehäuseteile eine derartige Größe haben, daß dazwischen eine Abstützung der Mehrfach-Düse - gegenüber der Spritzgießform - paßt.

Die an dem gemeinsamen Gehäuse jeweils voneinander getrennten Gehäuseteile können somit aufgrund ihres Abstandes im Mündungsbereich beliebige Wärmebewegungen durchführen, ohne sich gegenseitig zu beeinflussen und zu beschädigen.

Darüberhinaus kann durch eine Abstützung der Mehrfach-Düse der Spritzdruck wesentlich besser und gegenüber den Einzel-Düsenmündungen und Verschlußnadeln gleichmäßiger aufgefangen werden, wodurch auch eine unnötig stark dimensionierte Bauweise vermieden werden kann.

Die Erfindung erlaubt eine vorteilhafte Ausgestaltung bezüglich der Heizvorrichtung an der Düsenmündung, welche darin bestehen kann, daß an den einzelnen Düsenmündungen der voneinander beabstandeten Gehäuseteile jeweils eine eigene Heizvorrichtung angeordnet ist und jede Heizvorrichtung oder Düsenmündung einen eigenen Temperaturwächter oder Sensor für eine unabhängige Temperaturregelung jeder Einzeldüse der Mehrfach-Nadelverschluß-Düse aufweist. Während bei den bisherigen Mehrfachdüsen eine gemeinsame Heizung für alle Mündungen vorzusehen war, können also durch die erfindungsgemäße Anordnung die einzelnen Düsenmündungen präzise auf eine erforderliche Temperatur eingeregelt werden. Gleichzeitig werden ungewollte Temperaturbeeinflussungen der einzelnen Düsenmündungen gegeneinander ausgeschlossen.

Für einen präzisen, synchronen und vorallem platzsparenden Antrieb der Verschlußnadeln ist es zweckmäßig, wenn an den einzelnen Verschlußnadeln - der jeweiligen Mehrfach-Nadelverschluß-Düse - jeweils parallele Kolbenstangen des gemeinsamen Kolbenantriebes angreifen und jeweils mehrere koaxial zueinander und in Verschieberichtung hintereinander angeordnete Kolben gleichzeitig auf die Verschlußnadeln wirkend vorgesehen sind. Es ist also für eine Mehrfach-Nadelverschluß-Düse ein Kolben vorgesehen, der mehrere Kolbenstangen gleichzeitig, nämlich für jede Nadelverschlußdüse eine, beaufschlagt und in axialer Richtung hinter diesem Kolben ist wenigstens ein weiterer Kolben vorhanden, um eine genügend große Schließkraft auf die Verschlußnadeln zu übertragen.

Dabei ist es besonders zweckmäßig, wenn die gemeinsam auf die Verschlußnadeln wirkenden Antriebskolben an gemeinsamen, durchgehenden Kolbenstangen befestigt sind und wenn die Kolbenstangen jeweils einen Boden der die einzelnen Kolben enthaltenden, in Vorschubrichtung koaxial hintereinander angeordneten Zylinderkammern durchsetzen und in den Durchtrittsöffnungen der Böden gleitend geführt sind.

Dadurch ergibt sich für die einzelnen Kolbenstangen der Mehrfachdüse aufgrund der Verwendung mehrerer Kolben und entsprechend mehrerer Zylinder mit Böden die Möglichkeit, wenigstens zwei oder mehr Gleitführungen hintereinander anzuordnen. Da außerdem mehrere derartige durchgehende Kolbenstangen parallel zueinander vorgesehen sind und jede in der erwähnten Weise mehrfach geführt ist, ergibt sich eine derart präzise Führung, daß ein Verkippen der Kolbenstangen und demgemäß ein Verkanten der Kolben selbst praktisch ausgeschlossen wird. Somit wird auch die Gefahr vermieden, daß ein beispielsweise relativ geringer Druck des Druckmediums von zum Beispiel 3, 4, 5 oder 6 Bar nicht ausreichen könnte, um an der Mehrfachdüse bei allen Verschlußnadeln die erforderliche Schließkraft aufzubringen.

Dabei können die Kolbenstangen wenigstens soviele Gleitführungen haben, wie koaxiale Antriebskolben mit ihnen verbunden und Zylinderkammern für diese Antriebskolben axial hintereinander angeordnet sind. Besonders zweckmäßig ist es dabei, wenn die Kolbenstangen jeweils einstückig ausgebildet sind. Dabei können die Kolbenstangen den von den Verschlußnadeln am weitesten abliegenden Kolben mit einem Überstand überragen und der Überstand kann in dem Zylinderdeckel oder -abschluß - dieses entferntesten Kolbens - geführt sein, wodurch sich noch eine zusätzliche Führungsmöglichkeit ergibt.

Zur Verbesserung der Schließkraft ist es aufgrund der gemeinsamen Kolbenstangen und deren guten Führungen möglich, daß zusätzlich zu dem ersten und dem weiteren Antriebskolben wenigstens ein dritter Antriebskolben vorgesehen ist und in einer axial hinter den übrigen Zylinderkammern angeordneten eigenen abgeschlossenen und abgedichteten Zylinderkammer verschiebbar und mit der Kolbenstange verbunden angeordnet ist. Dies erlaubt es, den Durchmesser des Kolbenantriebes relativ klein zu halten, so daß er auf den Platzbedarf beschränkt bleiben kann, den das gemeinsame Gehäuse der Mehrfachdüse benötigt. Dennoch kann auch bei beschränktem Platz die erforderliche, häufig erhebliche Verschlußkraft auf diese Weise mit ausreichender Sicherheit aufgebracht werden, selbst wenn nur ein relativ geringer Preßluftdruck von zum Beispiel etwa 4 bis 6 Bar zur Verfügung steht.

Eine besonders zweckmäßige Ausgestaltung der Erfindung, die gleichzeitig eine gute Fixierung der einzelnen Verschlußnadeln innerhalb der Mehrfachdüse erlaubt und dabei die präzise Führung der Kolbenstangen ausnutzen kann, kann darin bestehen, daß das Ende der Verschlußnadeln koaxial in eine Aussparung oder Lochung der Kolbenstangen paßt und darin formschlüssig aber lösbar befestigt ist. Die Verschlußnadeln können somit von den Kolbenstangen nicht nur in axialer, sondern auch in Querrichtung gehalten werden.

Dabei ist es möglich, daß die Lochung der Kolbenstange bis über den von der Nadel am weitesten entfernten Kolben hinausführt und eine nach außen gerichtete Mündung hat, von welcher aus das Ende der Verschlußnadel erreichbar ist, und wenn die Verschlußnadel durch die Lochung der Kolbenstange herausziehbar und demontierbar ist, wobei die Lochung insbesondere zentral und konzentrisch in der Kolbenstange angeordnet sein kann. Dies erleichtert es, eine beschädigte oder verschlissene Verschlußnadel auf einfache Weise und ohne Demontage der gesamten Mehrfach-Düse auswechseln zu können, wobei jede einzelne Verschlußnadel der Mehrfachdüse auf diese Weise unabhängig von den anderen ausgewechselt werden kann.

Die durch die Kolbenstange durchgehende Lochung zur Aufnahme und zum Demontieren der Verschlußnadel kann einen an ihrem der Verschlußnadel abgewandten Ende anbringbaren Verschluß vorzugsweise einen Schraubverschluß, insbesondere eine als Verschluß dienende Schraube, aufweisen, deren nach innen gerichtete Stirnseite gleichzeitig den axialen Anschlag für das Ende der Verschlußnadel oder einen Zwischenkörper zwischen Verschluß und Nadelende bilden kann.

Nach Entfernen der Schraube wird die Nadel oder der mit ihr gekuppelte Zwischenkörper zuganglich und kann in axialer Richtung mit der Nadel herausgezogen werden.

Dabei kann das stirnseitige Ende der Verschlußnadel oder des Zwischenkörpers eine Lochung mit Hinterschneidung oder Gewinde haben, in welche von außen her durch die Lochung der Kolbenstange ein dazu passendes Werkzeug oder eine Zugschraube einsetzbar ist, womit die Verschlußnadel insbesondere mit dem Zwischenkörper in axialer Richtung durch die Kolbenstange herausziehbar ist.

Durch die Erfindung ergibt sich also die Möglichkeit, eine Mehrfach-Nadelverschluß-Düse vorzusehen, bei welcher auf engem Raum mehrere Verschlußnadeln mit ausreichender Kraft angetrieben werden können, selbst wenn nur ein relativ geringer Druck des Druckmediums zur Verfügung steht, wobei trotzdem in dem empfindlichen Mündungsbereich eine gegenseitige Beschädigung bei Wärmedehnungen ausgeschaltet und erforderlichenfalls eine zusätzliche Abstützung ermöglicht wird. Im Mündungsbereich ergeben sich also praktisch die Vorteile, die auch einzelne Nadelverschluß-Düsen jeweils nur mit einer Verschlußnadel haben, das heißt jede Düsenmündung ist unabhängig von der anderen und kann auch bezüglich ihrer Temperatur unabhängig von der Nachbar-Düsenmündung geregelt werden, obwohl alle Mündungen zu einer gemeinsamen Mehrfach-Nadelverschluß-Düse gehören.

Nachstehend sind Ausführungsbeispiele der Erfindung anhand der Zeichnung näher beschrieben. Es zeigt in zum Teil schematisierter Darstellung:
- Fig. 1: einen Teillängsschnitt durch eine Mehrfach-Nadelverschluß-Düse mit zwei Verschlußnadeln und zwei Düsenmündungen gemäß der Schnittlinie A-A in Figur 2,
- Fig. 2: eine Draufsicht einer Zweifach-Nadelverschluß-Düse ohne den Kolbenantrieb,
- Fig. 3: einen der Figur 1 entsprechenden Schnitt durch eine Vierfach-Nadelverschluß-Düse gemäß der Schnittlinie B-B in Figur 4, und
- Fig. 4: eine Draufsicht der Vierfach-Nadelverschluß-Düse gemäß Figur 3 ohne den Kolbenantrieb.

Bei der nachfolgenden Beschreibung zweier Ausführungsbeispiele erhalten übereinstimmende Teile oder Teile mit übereinstimmenden Funktionen auch bei jeweils abgewandelter Gestaltung übereinstimmende Bezugszahlen.

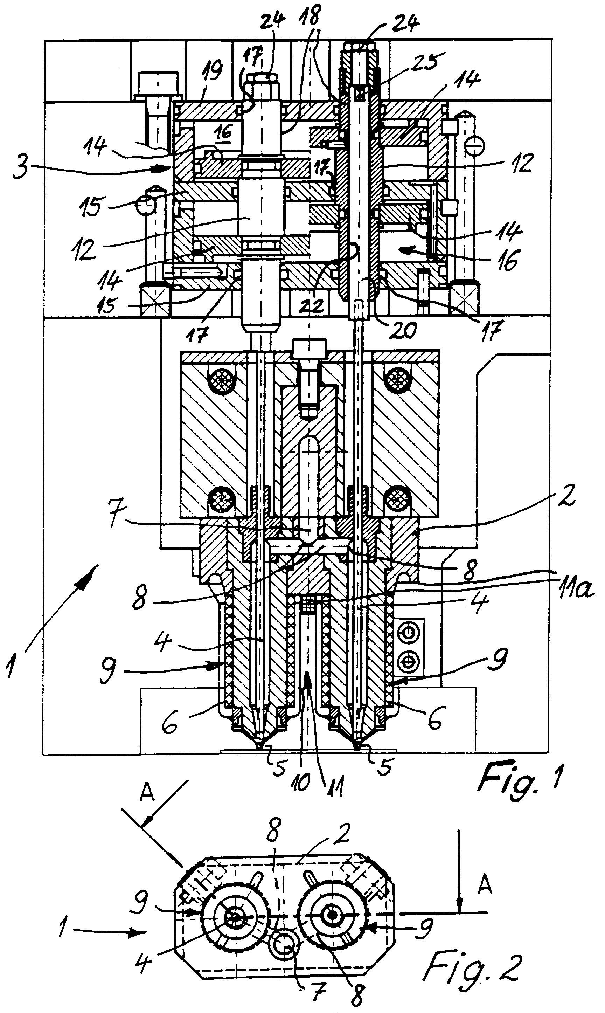

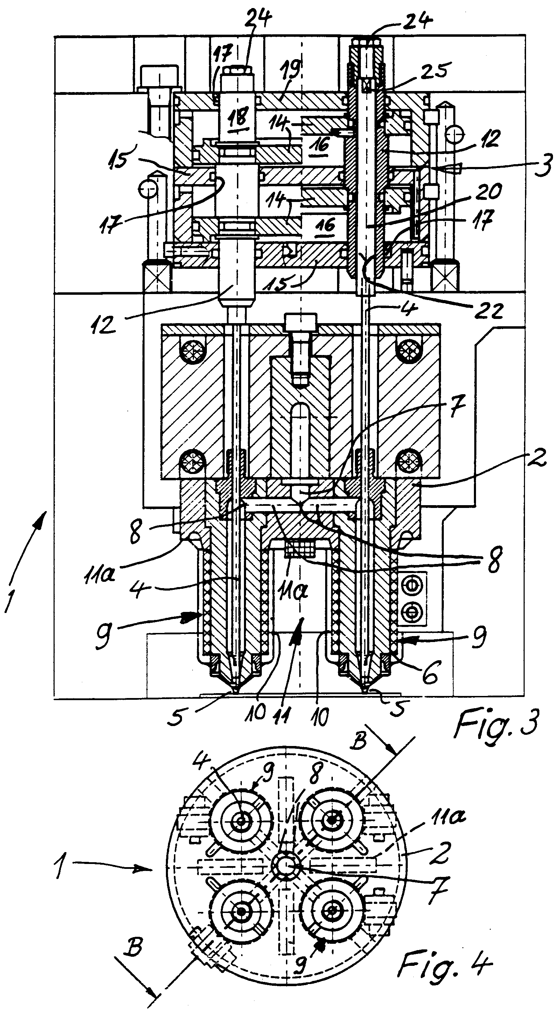

Eine im Ganzen mit 1 bezeichnete Mehrfach-Nadelverschluß-Düse für Spritzgießformen kann gemäß Figur 1 und 2 zwei und gemäß Figur 3 und 4 vier in einem gemeinsamen Gehäuse 2 angeordnete und einen gemeinsamen, im Ganzen mit 3 bezeichneten Kolbenantrieb aufweisende Verschlußnadeln 4 enthalten.

Jede Verschlußnadel 4 verschließt eine ihr zugeordnete Düsenmündung 5 und kann in Offenstellung zurückgezogen werden, wenn der Spritzgießwerkstoff in die Mehrfachform eingefüllt wird. Dabei ist im Bereich der Düsenmündungen 5 jeweils eine Heizung 6 angeordnet.

In dem gemeinsamen Gehäuse 2 erkennt man Zuführkanäle 7 mit Abzweigungen 8, von welchen aus die einzelnen Verschlußnadeln 4 und die Düsenmündungen 5 jeweils mit Gießwerkstoff versorgt werden.

Sowohl in Figur 1 als auch in Figur 3 erkennt man deutlich, daß das gemeinsame Gehäuse 2 in Richtung zu den Düsenmündungen 5 hin gesehen unterhalb der Zuführkanäle 7 und deren Verzweigungen oder Abzweigungen 8 in voneinander beabstandete, die einzelnen Verschlußnadeln 4 und deren Düsenmündungen 5 aufweisende Gehäuseteile 9 aufgeteilt ist und daß diese Gehäuseteile 9 jeweils zwischen ihren äußeren Wandungen 10 einen Zwischenraum 11 haben, jedoch mit dem gemeinsamen Gehäuse 2 verbunden sind. Das Gehäuse 2 erhält auf diese Weise eine "euterähnliche" Gestaltung, wobei die Düsenmündungen 5 durch den Zwischenraum 11 so voneinander beabstandet sind, daß sie unabhängig voneinander Wärmebewegungen durchführen können und sich dabei nicht schädigen.

In allen Figuren ist angedeutet, daß die unterhalb des Gehäusebereiches mit den gemeinsamen Zuführkanälen 7 und deren Verzweigung 8 vorgesehenen Abstände der einzelnen Gehäuseteile 9 eine derartige Größe haben, daß dazwischen Abstützungen 11a der gesamten Mehrfach-Düse 1 passen. Die räumliche Trennung der zu dem gesamten Gehäuse 2 gehörenden Gehäuseteile 9 im Bereich der Düsenmündungen 5 und des größten Teiles der Verschlußnadeln 4 erlaubt also eine stabilere Abstützung der gesamten Mehrfachdüse nicht nur an ihrem Außenumfang, sondern in ihrem Zentrum näherliegenden Bereichen.

Die Heizungen 6 an den Düsenmündungen 5 wurden bereits erwähnt. In Figur 1 und 3 erkennt man deutlich, daß an den einzelnen Düsenmündungen 5 der voneinander beabstandeten Gehäuseteile 9 jeweils eine eigene Heizvorrichtung 6 angeordnet ist, so daß jede Heizvorrichtung 6 oder Düsenmündung 5 einen eigenen Temperaturwächter oder Sensor für eine unabhängige Temperaturregelung jeder Einzeldüse dieser Mehrfach-Nadelverschluß-Düse 1 haben kann. Entsprechend gute Spritzgießergebnisse lassen sich mit einer solchen Mehrfach-Düse 1 erreichen.

Für den Antrieb der Verschlußnadeln greifen an den einzelnen Verschlußnadeln 4 jeweils parallele Kolbenstangen 12 des gemeinsamen, im Ganzen mit 3 bezeichneten Kolbenantriebes an, wobei man in Figur 1 und 3 jeweils mehrere, nämlich zwei koaxial zueinander und in Verschieberichtung hintereinander angeordnete Kolben 14 erkennt, die jeweils gleichzeitig auf die Verschlußnadeln 4 der Mehrfachdüse 1 wirken, also sehr platzsparend und kompakt untergebracht werden können.

Damit dabei keine gegenseitige Beeinflussung der Verschlußnadeln über den Kolbenantrieb 3 erfolgen kann, wenn die Verschlußnadeln 4 beispielsweise durch einströmenden Gießwerkstoff auch in Querrichtung belastet werden, ist in beiden Ausführungsbeispielen vorgesehen, daß die gemeinsam auf die Verschlußnadeln 4 wirkenden Antriebskolben 14 an gemeinsamen, durchgehenden Kolbenstangen 12 befestigt sind und daß die Kolbenstangen 12 jeweils einen Boden 15 der die einzelnen Kolben 14 enthaltenden, in Vorschubrichtung koaxial hintereinander angeordneten Zylinderkammern 16 durchsetzen und in den Durchtrittsöffnungen 17 der Böden 15 gleitend geführt sind.

Die Kolbenstangen 12 haben also wenigstens soviele durch die Durchtrittsöffnungen 17 gebildete Gleitführungen, wie koaxiale Antriebskolben 14 mit ihnen jeweils verbunden und Zylinderkammern 16 für diese Antriebskolben 14 axial hintereinander angeordnet sind. Dies führt zu einer sehr stabilen Halterung und Führung der Kolbenstangen 12, so daß sie auch bei einer Querbelastung durch die Verschlußnadeln 4 nicht verkippt und die Kolben 14 nicht verkantet werden. Dabei sind die Kolbenstangen 12 in den Ausführungsbeispielen einstückig ausgebildet.

In Figur 1 und 3 erkennt man, daß die Führung und Festlegung der Kolbenstangen 12 gegen seitliche Auslenkungen oder Verkippungen noch dadurch verbessert sind, daß die Kolbenstangen 12 den von den Verschlußnadeln 4 am weitesten abliegenden Kolben 14 mit einem Überstand 18 überragen und der Überstand 18 in dem Zylinderdeckel oder -abschluß 19 geführt ist. Somit ergeben sich in diesem Falle sogar bei zwei Antriebskolben 14 drei Gleitführungen für die jeweilige Kolbenstange 12.

In beiden Ausführungsbeispielen ist ein erster und ein weiterer Antriebskolben 14 vorgesehen, jedoch könnte selbstverständlich wenigstens ein dritter Antriebskolben vorgesehen sein und in einer axial hinter den übrigen Zylinderkammern 16 angeordneten eigenen weiteren abgedichteten Zylinderkammer verschiebbar und mit den Kolbenstangen 12 verbunden angeordnet sein, falls auf engem Raum und im Hinblick auf einen geringen Druck des Antriebsmediums eine höhere Schließkraft erforderlich wäre.

In Figur 1 und 3 ist noch erkennbar, daß das Ende der Verschlußnadeln 4 jeweils über einen Zwischenkörper 20 koaxial in eine Aussparung oder Lochung 22 der Kolbenstangen 12 paßt und formschlüssig aber lösbar befestigt ist. Dadurch können quer zur Längserstreckung der Nadeln 4 auftretende Kräfte gut aufgefangen werden.

Ferner erkennt man, daß die Lochung 22 der Kolbenstange 12 jeweils bis über den von der Nadel 4 am weitesten entfernten Kolben 14 hinausführt und eine nach außen gerichtete Mündung hat, von welcher aus das Ende der Verschlußnadel 4 bzw. der Zwischenkörper 20 erreichbar ist, so daß die Verschlußnadel 4 durch diese Lochung 22 der Kolbenstange 12 herausziehbar und demontierbar ist. Die Lochung 22 ist dabei zentral und konzentrisch in der Kolbenstange 12 angeordnet und von dem Zwischenkörper 20 praktisch ausgefüllt, während der Querschnitt der Verschlußnadel 4 etwas geringer ist.

Die Lochung 22 hat an ihrem der Verschlußnadel 4 abgewandten Ende einen Verschluß, der im Ausführungsbeispiel als Schraube 24 ausgebildet ist, deren nach innen gerichtete Stirnseite gleichzeitig den axialen Anschlag für das Ende der Verschlußnadel 4 oder den Zwischenkörper 20 zwischen Verschluß und Nadelende bildet.

Das stirnseitige, dem Verschluß 24 zugewandte Ende des Zwischenkörpers 20 hat eine Gewindeöffnung 25 für die Schraube 24, in welche ein dazu passendes Werkzeug eingeschraubt werden kann, um den Zwischenkörper 20 mit der Verschlußnadel 4 in axialer Richtung durch die Kolbenstange 8 herausziehen zu können. Umgekehrt kann auf diese Weise eine neue Verschlußnadel 4 wieder montiert werden, so daß ein Auswechseln einzelner Verschlußnadeln 4 an der Mehrfachdüse 1 auf einfache Weise und ohne gegenseitige Beeinflussung möglich ist.

Die Mehrfach-Nadelverschluß-Düse 1 gemäß den verschiedenen Ausführungsbeispielen dient zur gleichzeitigen Beaufschlagung mehrerer Einzelformen in einer Spritzgießform und hat zwei oder mehr in einem gemeinsamen Gehäuse 2 angeordnete und einen gemeinsamen Kolbenantrieb 3 aufweisende Verschlußnadeln 4. Jede Verschlußnadel 4 verschließt an der Mehrfach-Düse 1 eine ihr zugeordnete Düsenmündung 5 und kann von dieser für das Einspritzen von Gießwerkstoff zurückgezogen werden. Dabei kann im Bereich der jeweiligen Düsenmündung 5 eine eigene Heizvorrichtung 6 angeordnet sein. In dem gemeinsamen Gehäuse 2 sind Zuführkanäle 7 mit Verzweigungen 8 vorgesehen, die zu den einzelnen Verschlußnadeln 4 und deren Mündungen 5 führen. Das gemeinsame Gehäuse 2 ist dabei unterhalb diesen gemeinsamen Zuführkanälen 7 und deren Verzweigungen 8 in voneinander beabstandete, die einzelnen Verschlußnadeln 4 zumindest zum Teil aufnehmende und deren Düsenmündungen 5 aufweisende Gehäuseteile 9 aufgeteilt. Die Aufteilung ist dabei auch räumlich so gestaltet, daß diese Gehäuseteile 9 jeweils zwischen ihren rund um die Nadeln 4 verlaufenden Wandungen 10 einen Zwischenraum 11 haben und mit dem gemeinsamen Gehäuse 2 - gegebenenfalls nachträglich - verbunden sind. Somit können unterhalb des gemeinsamen Gehäusebereiches zwischen den Gehäuseteilen 9 Abstützungen 11 der Mehrfach-Düse untergebracht werden.

## Patentansprüche

1. Mehrfach-Nadelverschluß-Düse (1) für Spritzgießformen mit wenigstens zwei in einem gemeinsamen Gehäuse (2) angeordneten und einen gemeinsamen Kolbenantrieb (3) aufweisenden Verschlußnadeln (4), deren jede eine ihr zugeordnete Düsenmündung (5) verschließt und im Bereich der Düsenmündung (5) insbesondere eine Heizung (6) aufweist, wobei in dem gemeinsamen Gehäuse (2) Zuführkanäle (7) mit Abzweigungen (8) zu den einzelnen Verschlußnadeln (4) gemeinsam angeordnet sind, **dadurch gekennzeichnet**, daß das gemeinsame Gehäuse (2) unterhalb der Zuführkanäle (7) und/oder deren Verzweigung (8) in voneinander beabstandete, die einzelnen Verschlußnadeln (4) und deren Düsenmündungen (5) aufweisende Gehäuseteile (9) aufgeteilt ist, daß diese Gehäuseteile (9) jeweils zwischen ihren Wandungen (10) einen Zwischenraum (11) haben und mit dem gemeinsamen Gehäuse (2) verbunden sind und daß die unterhalb des Gehäusebereiches mit den gemeinsamen Zuführkanälen (7) und deren Verzweigung (8) vorgesehenen Abstände der einzelnen Gehäuseteile (9) eine derartige Größe haben, daß dazwischen eine Abstützung (11a) der Mehrfach-Düse (1) paßt.

2. Mehrfach-Nadelverschluß-Düse nach Anspruch 1, dadurch gekennzeichnet, daß an den einzelnen Düsenmündungen (5) der voneinander beabstandeten Gehäuseteilen (9) jeweils eine eigene Heizvorrichtung (6) angeordnet ist und jede Heizvorrichtung (6) oder Düsenmündung (5) einen eigenen Temperaturwächter oder Sensor für eine unabhängige Temperaturregelung jeder Einzeldüse der Mehrfach-Nadelverschluß-Düse (1) aufweist.

3. Mehrfach-Nadelverschluß-Düse nach Anspruch 1 oder 2, dadurch gekennzeichnet, daß an den einzelnen Verschlußnadeln (4) jeweils parallele Kolbenstangen (12) des gemeinsamen Kolbenantriebes (3) angreifen und jeweils mehrere koaxial zueinander und in Verschieberichtung hintereinander angeordnete Kolben (14) gleichzeitig auf die Verschlußnadeln (4) wirkend vorgesehen sind.

4. Mehrfach-Nadelverschluß-Düse nach einem der Ansprüche 1 bis 3, dadurch gekennzeichnet, daß die gemeinsam auf die Verschlußnadeln (4) wirkenden Antriebskolben (14) an gemeinsamen, durchgehenden Kolbenstangen (12) befestigt sind und daß die Kolbenstangen (12) jeweils einen Boden (15) der die einzelnen Kolben (14) enthaltenden, in Vorschubrichtung koaxial hintereinander angeordneten Zylinderkammern (16) durchsetzen und in den Durchtrittsöffnungen (17) der Böden (15) gleitend geführt sind.

5. Mehrfach-Nadelverschluß-Düse nach einem der Ansprüche 1 bis 4, dadurch gekennzeichnet, daß die Kolbenstangen (12) wenigstens soviele Gleitführungen haben, wie koaxiale Antriebskolben (14) mit ihnen verbunden und Zylinderkammern (16) für diese Antriebskolben (14) axial hintereinander angeordnet sind.

6. Mehrfach-Nadelverschluß-Düse nach einem der Ansprüche 1 bis 5, dadurch gekennzeichnet, daß die Kolbenstangen (12) einstückig ausgebildet sind.

7. Mehrfach-Nadelverschluß-Düse nach einem der Ansprüche 1 bis 6, dadurch gekennzeichnet, daß die Kolbenstangen (12) den von den Verschlußnadeln (4) am weitesten abliegenden Kolben (14) mit einem Überstand (18) überragen und der Überstand (16) in dem Zylinderdeckel oder -abschluß (19) geführt ist.

8. Mehrfach-Nadelverschluß-Düse nach einem der Ansprüche 1 bis 7, dadurch gekennzeichnet, daß zusätzlich zu den Antriebskolben (14) wenigstens ein weiterer, zum Beispiel dritter Antriebskolben (14) vorgesehen ist und in einer axial hinter den übrigen Zylinderkammern (16) angeordneten eigenen abgeschlossenen und abgedichteten Zylinderkammer verschiebbar und mit den Kolbenstangen (12) verbunden angeordnet ist.

9. Mehrfach-Nadelverschluß-Düse nach einem der Ansprüche 1 bis 8, dadurch gekennzeichnet, daß die Enden der Verschlußnadeln (4) insbesondere über Zwischenkörper (20) koaxial in eine Lochung (22) der Kolbenstangen (12) passen und formschlüssig aber lösbar befestigt sind.

10. Mehrfach-Nadelverschluß-Düse nach einem der Ansprüche 1 bis 9, dadurch gekennzeichnet, daß die Lochung (22) der Kolbenstange (12) bis über den von den Nadeln (4) am weitesten entfernten Kolben (14) hinausführt und eine nach außen gerichtete Mündung hat, von welcher aus das Ende der Verschlußnadel (4) erreichbar ist, und daß die Verschlußnadel (4) jeweils durch ihre Lochung (22) der Kolbenstange (12) herausziehbar und demontierbar ist, wobei die Lochung (22) insbesondere zentral und konzentrisch in der Kolbenstange (12) angeordnet ist.

11. Mehrfach-Nadelverschluß-Düse nach einem der Ansprüche 1 bis 10, dadurch gekennzeichnet, daß die durch die Kolbenstange (12) durchgehende Lochung (22) zur Aufnahme und zum Demontieren der Verschlußnadel (4) und insbesondere ihres Zwischenkörpers (20) einen an ihrem der Verschlußnadel (4) abgewandten Ende anbringbaren Verschluß, vorzugsweise einen Schraubverschluß, insbesondere eine als Verschluß dienende Schraube (24), aufweist, deren nach innen gerichtete Stirnseite gleichzeitig den axialen Anschlag für das Ende der Verschlußnadel (4) oder den Zwischenkörper (20) zwischen Verschluß und Nadelende bilden kann.

12. Mehrfach-Nadelverschluß-Düse nach einem der Ansprüche 1 bis 11, dadurch gekennzeichnet, daß das stirnseitige Ende der Verschlußnadel (4) oder des Zwischenkörpers (20) eine Lochung mit Hinterschneidung oder Gewinde hat, in welche von außen her durch die Lochung (20) der Kolbenstange (12) ein dazu passendes Werkzeug oder eine Zugschraube einsetzbar ist, womit die Verschlußnadel (4), insbesondere mit dem Zwischenkörper (20), in axialer Richtung durch die Kolbenstange (12) herausziehbar ist.

## Claims

1. A multiple needle valve nozzle (1) for injection moulds, including at least two valve needles (4) arranged in a common housing (2) and having a common piston drive (3), each valve needle closing a nozzle opening (5) associated thereto and having in particular a heating means (6) in the region of the nozzle opening 5), wherein feed channels (7) with branches (8) to the individual valve needles (4) are jointly arranged in the common housing (2), **characterized in that** below the feed channels (7) and/or their branches (8) the common housing (2) is divided into mutually spaced housing parts (9) having the individual valve needles (4) and their nozzle openings (5), that said housing parts (9) in each case have an interspace (11) between their walls (10) and are connected to the common housing (2), and that the spacing of the individual housing parts (9), as is provided below the housing zone with the common feed channels (7) and their branches (8), is of such a size that a support (11a) for the multiple nozzle (1) fits therebetween.

2. A multiple needle valve nozzle as claimed in claim 1, characterized in that a separate heating means (6) is arranged at each of the individual nozzle openings (5) of the mutually spaced housing parts (9) and each heating means (6) or nozzle opening (5) has its own temperature monitor or sensor for independent temperature control of each individual nozzle of the multiple needle valve nozzle (1).

3. A multiple needle valve nozzle as claimed in claim 1 or claim 2, characterized in that the individual valve needles (4) are engaged by parallel piston rods (12) of the common piston drive (3) and a plurality of pistons (14) are provided which are arranged coaxially one behind the other in a displacement direction and act simultaneously on the valve needles (4).

4. A multiple needle valve nozzle as claimed in any one of claims 1 to 3, characterized in that the drive pistons (14) acting in common on the valve needles (4) are fixed to common, throughgoing piston rods (12), and that the piston rods (12) in each case pass through a floor (15) of the cylinder chambers (16) which contain the individual pistons (14) and are arranged coaxially one behind the other in the forward feed direction, said piston rods (12) in each case being slidably guided in the passage openings (17) in the floors (15).

5. A multiple needle valve nozzle as claimed in any one of claims 1 to 4, characterized in that the piston rods (12) have sliding guides of a number at least as great as that of coaxial pistons (14) connected thereto and that of cylinder chambers (16) arranged axially one behind the other for said drive pistons (14).

6. A multiple needle valve nozzle as claimed in any one of claims 1 to 5, characterized in that the piston rods (12) are of integral design.

7. A multiple needle valve nozzle as claimed in any one of claims 1 to 6, characterized in that the piston rods (12) have a projecting portion (18) which projects past the piston (14) most remote from the valve needles (4) and is guided in the cylinder lid or closure (19).

8. A multiple needle valve nozzle as claimed in any one of claims 1 to 7, characterized in that in addition to the drive pistons (14), provision is made for at least one further drive piston (14), for example a third one, which is displaceably arranged in a separate, sealed off cylinder chamber arranged axially behind the other cylinder chambers (16) and is connected to the piston rods (12).

9. A multiple needle valve nozzle as claimed in any one of claims 1 to 8, characterized in that the ends of the valve needles (4) fit coaxially into a bore (22) of the piston rods (12), particularly via intermediate bodies (20), and are fixed positively but releasably.

10. A multiple needle valve nozzle as claimed in any one of claims 1 to 9, characterized in that the bore (22) of the piston rod (12) extends beyond the piston (14) furthest removed from the needles (4) and has an outwardly directed opening affording access to the end of the valve needle (4) and that the valve needle is adapted to be pulled out and disassembled via the bore (22) in the piston rod (12), in particular the bore (22) being arranged centrally and concentrically in the piston rod (12).

11. A multiple needle valve nozzle as claimed in any one of claims 1 to 10, characterized in that the bore (22) passing through the piston rod (12) for receiving and disassembling the valve needle (4) and particularly its intermediate body (20) has a closure, preferably a screw plug, particularly a screw (24) serving as closure, adapted to be applied to the bore-end remote from the valve needle (4), the inwardly directed end face of which can simultaneously constitute the axial stop for the end of the valve needle (4) or for the body (20) intermediate closure and needle end.

12. A multiple needle valve nozzle as claimed in any one of claims 1 to 11, characterized in that the front end of the valve needle (4) or of the intermediate body (20) has a bore with an undercut or thread into which a matching tool or pulling bolt can be set from the outside through the bore (20) in the piston rod (12), whereby the valve needle (4), particularly with the intermediate body (20), can be pulled out in the axial direction through the piston rod (12).

## Revendications

1. Buse multiple à fermeture à aiguilles (1) destinée à des moules de moulage par injection et comprenant au moins deux aiguilles de fermeture (4) qui sont disposées dans un carter commun (2), qui comportent un entraînement par pistons commun (3) et dont chacune ferme une embouchure de buse associée (5) et comporte en particulier un chauffage (6) dans la région de l'embouchure de buse (5), cependant que des canaux d'amenée (7) sont disposés en commun dans le carter commun (2) en étant pourvus d'embranchements (8) allant vers les diverses aiguilles de fermeture (4), caractérisée par le fait que le carter commun (2) est divisé, au-dessous des canaux d'amenée (7) et/ou de leur embranchement (8), en des parties de carter (9) qui comportent les diverses aiguilles de fermeture (4) et leurs embouchures de buse (5), par le fait que ces parties de carter (9) présentent chacune entre leurs parois (10) un espace intermédiaire (11), et qu'elles sont reliées au carter commun (2), et par le fait que les distances entre les diverses parties de carter (9) qui sont prévues au-dessous de la région du carter pourvue des canaux d'amenée communs (7) et de leur embranchement (8) présentent une valeur telle qu'un appui (11a) destiné à la buse multiple (1) s'ajuste entre elles.

2. Buse multiple à fermeture à aiguilles selon la revendication 1, caractérisée par le fait qu'un dispositif de chauffage propre (6) est à chaque fois disposé sur les diverses embouchures de buse (5) des parties de carter (9) qui sont à distance les unes des autres, et que chaque dispositif de chauffage (6) ou chaque embouchure de buse (5) comporte un contrôleur ou un capteur de température qui lui est propre en vue d'une régulation indépendante de la température de chaque buse individuelle de la buse multiple à fermeture à aiguilles (1).

3. Buse multiple à fermeture à aiguilles selon la revendication 1 ou 2, caractérisée par le fait que des tiges de piston parallèles (12) de l'entraînement par piston commun (3) viennent à chaque fois en prise avec les diverses aiguilles de fermeture (4), et que plusieurs pistons coaxiaux (14) qui sont disposés les uns derrière les autres dans la direction du coulissement sont à chaque fois prévus pour agir simultanément sur les aiguilles de fermeture (4).

4. Buse multiple à fermeture à aiguilles selon l'une quelconque des revendications 1 à 3, caractérisée par le fait que les pistons d'entraînement (14) qui agissent en commun sur les aiguilles de fermeture (4) sont fixés sur des tiges de piston communes et continues (12), et par le fait que les tiges de piston (12) traversent à chaque fois un fond (15) des chambres de cylindres (16) qui contiennent les divers pistons (14) et qui sont disposées les unes derrière les autres d'une manière coaxiale dans la direction de l'avance, et qu'elles sont guidées en glissement dans les ouvertures de passage (17) des fonds (15).

5. Buse multiple à fermeture à aiguilles selon l'une quelconque des revendications 1 à 4, caractérisée par le fait que les tiges de piston (12) présentent un nombre de guidages en glissement au moins égal au nombre des pistons d'entraînement coaxiaux (14) qui leur sont reliés et des chambres de cylindres (16) qui sont destinées à ces pistons d'entraînement (14) et qui sont disposées les unes derrière les autres dans le sens axial.

6. Buse multiple à fermeture à aiguilles selon l'une quelconque des revendications 1 à 5, caractérisée par le fait que les tiges de piston (12) sont d'un seul tenant.

7. Buse multiple à fermeture à aiguilles selon l'une quelconque des revendications 1 à 6, caractérisée par le fait que les tiges de piston (12) font saillie par un prolongement (18) au-delà des pistons (14) qui sont les plus éloignés des aiguilles de fermeture (4), et que le prolongement (18) est guidé dans le couvercle ou dans la fermeture (19) des cylindres.

8. Buse multiple à fermeture à aiguilles selon l'une quelconque des revendications 1 à 7, caractérisée par le fait qu'en plus des pistons d'entraînement (14), il est prévu au moins un autre piston d'entraînement (14), par exemple un troisième piston d'entraînement, et qu'il est disposé en pouvant coulisser dans une chambre de cylindre qui lui est propre, qui est située derrière les autres chambres de cylindres (16) dans le sens axial et qui est fermée et rendue étanche, et en étant relié aux tiges de piston (12).

9. Buse multiple à fermeture à aiguilles selon l'une quelconque des revendications 1 à 8, caractérisée par le fait que les extrémités des aiguilles de fermeture (4) s'ajustent d'une manière coaxiale dans un perçage (22) des tiges de piston (12), en particulier par l'intermédiaire de corps intermédiaires (20), et qu'elles sont fixées par conjugaison des formes, mais d'une manière amovible.

10. Buse multiple à fermeture à aiguilles selon l'une quelconque des revendications 1 à 9, caractérisée par le fait que le perçage (22) des tiges de piston (12) s'étend jusqu'au-delà du piston (14) qui est le plus éloigné des aiguilles (4), et qu'il présente une embouchure qui est dirigée vers l'extérieur et depuis laquelle on peut atteindre l'extrémité de l'aiguille de fermeture (4), et par le fait que chaque aiguille de fermeture (4) peut être retirée et démontée à travers le perçage (22) de la tige de piston (12), le perçage (22) étant disposé en particulier dans la tige de piston (12) d'une manière centrée et coaxiale.

11. Buse multiple à fermeture à aiguilles selon l'une quelconque des revendications 1 à 10, caractérisée par le fait que le perçage (22) qui traverse la tige de piston (12) et qui est destiné au logement et au démontage de l'aiguille de fermeture (4), et en particulier de son corps intermédiaire (20), présente une fermeture qui peut être posée sur son extrémité opposée à l'aiguille de fermeture (4) et qui est de préférence une fermeture à visser, et en particulier une vis (24) servant de fermeture, dont le côté frontal dirigé vers l'intérieur peut former en même temps la butée axiale qui est destinée à l'extrémité de l'aiguille de fermeture (4) ou au corps intermédiaire (20) entre la fermeture et l'extrémité de l'aiguille.

12. Buse multiple à fermeture à aiguilles selon l'une quelconque des revendications 1 à 11, caractérisée par le fait que l'extrémité frontale de l'aiguille de fermeture (4) ou du corps intermédiaire (20) présente un perçage qui est pourvu d'une contre-dépouille ou d'un filetage dans lequel on peut introduire depuis l'extérieur, à travers le perçage (22) de la tige de piston (12), un outil adapté à cette fin ou une vis de traction au moyen de laquelle on peut retirer l'aiguille de fermeture (4), en particulier avec le corps intermédiaire (20), dans la direction axiale et à travers la tige de piston (12).
